# EUROPÄISCHE PATENTANMELDUNG

(11) **EP 2 095 930 A2**
(43) Veröffentlichungstag der Anmeldung: **02.09.2009**
(21) Anmeldenummer: 09000714.7
(22) Anmeldetag: 20.01.2009
(51) Int. Cl.: B29C 65/60

(54) **Verfahren und Vorrichtung zum Verbinden von Gegenständen**

(30) Priorität: 26.02.2008 DE 102008011151
(71) Anmelder: Maschinenfabrik Spaichingen GmbH, 78549 Spaichingen (DE)
(72) Erfinder: Wein, Joachim, 78652 Deißlingen (DE)
(74) Vertreter: Manitz, Finsterwald & Partner GbR

(57) **Zusammenfassung**

Bei einem Verfahren zum Verbinden von Gegenständen mittels wenigstens eines plastifizierbaren hohlzylindrischen Nietdoms, der durch Anlegen eines Bearbeitungselements erwärmbar ist, das auf seiner auf dem hohlzylindrischen Nietdom aufzusetzenden Bearbeitungsseite mit einem in den Hohlraum des Nietdoms einführbaren Zapfen und einer diesen umgebenden ringförmigen Ausnehmung versehen ist, wird an dem Nietdom durch Anlegen und Nachführen des Bearbeitungselements ein Nietkopf ausgebildet und das Bearbeitungselement anschließend von dem gebildeten Nietkopf abgezogen. Dabei wird mit dem Nachführen des Bearbeitungselements über dessen in den Hohlraum des Nietdoms eintretenden Zapfen auf den Nietdom allgemein quer zur Nachführrichtung eine von innen nach außen gerichtete Spreizwirkung ausgeübt und der Nietdom zur Formung des Nietkopfs in teigigem Zustand umgebördelt. Es wird auch eine entsprechende Vorrichtung zum Verbinden von Gegenständen angegeben.

## Beschreibung

Die Erfindung betrifft ein Verfahren zum Verbinden von Gegenständen mittels wenigstens eines plastifizierbaren hohlzylindrischen Nietdoms, wobei der Nietdom durch Anlegen eines Bearbeitungselements erwärmbar ist, das auf seiner auf den hohlzylindrischen Nietdom aufzusetzenden Bearbeitungsseite mit einem in den Hohlraum des Nietdoms einführbaren Zapfen und einer diesen umgebenden ringförmigen Ausnehmung versehen ist, an dem Nietdom durch Anlegen und Nachführen des Bearbeitungselements ein Nietkopf ausgebildet und das Bearbeitungselement anschließend von dem gebildeten Nietkopf abgezogen wird. Sie betrifft ferner eine Vorrichtung der im Oberbegriff des Anspruchs 10 angegebenen Art.

Verfahren und Vorrichtungen dieser Art arbeiten nach dem so genannten Nietdom-Schweißprinzip, wonach zunächst ein an einem der Gegenstände vorgesehenes Verbindungselement mit einem an ihm ausgebildeten Vorsprung, dem so genannten Nietdom, durch eine Öffnung des anderen Gegenstands gesteckt und dann das freie Ende des Nietdoms mit einem angeformten Nietkopf versehen wird. Das Verbindungselement kann dabei auch aus einem separaten Bauteil bestehen, das durch beide Gegenstände gesteckt wird und an einem Ende einen bereits vorher angebrachten Kopf aufweist.

In den meisten Fällen besteht wenigstens einer der beiden Fügepartner aus einem plastifizierbarem Kunststoff. Prinzipiell reicht es jedoch aus, wenn allein die beteiligten Verbindungselemente oder die an diesem vorgesehenen Nietdome aus einem plastifizierbaren Material bestehen.

Zur Erwärmung und Plastifizierung der Nietdome sind verschiedene Verfahren bekannt. Weit verbreitet ist z.B. das Ultraschallschweißen. Hierbei werden Ultraschall-Schwingwerkzeuge, so genannte Sonotroden, auf die Nietdome aufgesetzt, um diese in hochfrequente Schwingungen zu versetzen und dadurch die Verbindungselemente bzw. Nietdome entsprechend zu erwärmen.

Da sich mit einem solchen Ultraschallschweißverfahren z.B. im Bereich von Kraftfahrzeug-Türverkleidungen Probleme ergeben können, nachdem der Ultraschall von den Nietdomen zum Teil ins Werkstück weitergeleitet und die aufgeschäumten Schichten stellenweise in sich zusammenfallen können, wurde auch bereits vorgeschlagen, die Wärme mittels eines erhitzten Kalotteneinsatzes aufzubringen und den Nietdom durch zusätzliches Aufbringen von mechanischem Druck herunterzuschweißen (vgl. EP 1 661 689 A2). Damit möglichst wenig Masse abgekühlt und wieder aufgeheizt werden muss, wodurch entsprechend Zeit eingespart wird, wird der Kalotteneinsatz zum Kühlen vom Wärmeträger abgekoppelt. Nach dem Abkühlen koppelt der Kalotteneinsatz an dem Wärmeträger an und wird wieder aufgeheizt.

Fig. 1 zeigt in schematischer Darstellung eine bei dem bisher angewandten Verfahren eingesetzte herkömmliche erwärmbare Kalotte 10 mit einem zumindest im Wesentlichen kreiszylindrischen Zapfen 12 und einer diesen umgebenden ringförmigen Ausnehmung 14.

In der Fig. 2 sind schematisch zwei miteinander zu verbindende Gegenstände 16, 18 dargestellt, wobei ein dem einen Gegenstand 16 zugeordneter Nietdom 20 durch eine Öffnung 22 des anderen Gegenstandes 18 hindurchgesteckt ist. Wie bereits erwähnt, kann insbesondere auch ein den Nietdom aufweisendes separates Verbindungselement vorgesehen sein.

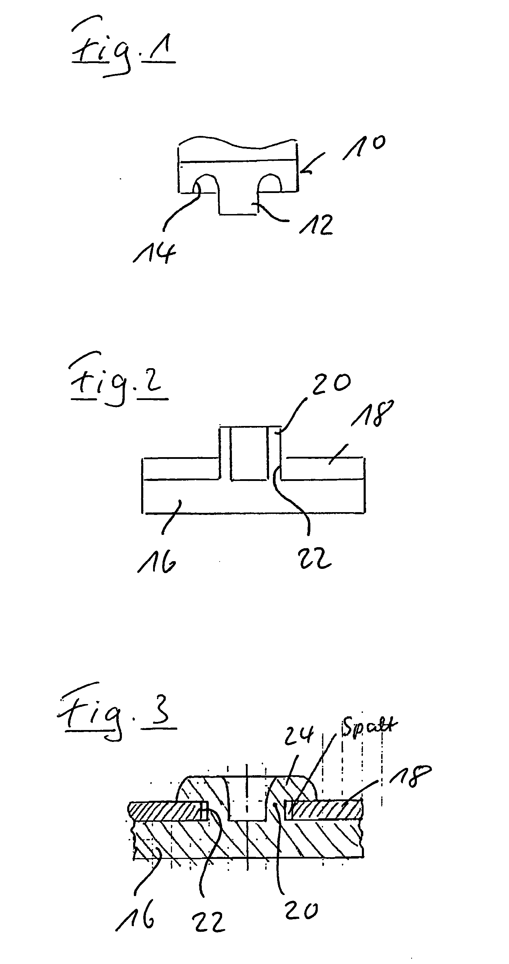

Bei dem bekannten Verfahren wird nun die Planfläche des Nietdoms 20 über die Kontaktfläche der in der Fig. 1 wiedergegebenen herkömmlichen heißen Kalotte 10 aufgeheizt und oberflächlich plastifiziert, so dass nach und nach der Nietdom 20 "schichtweise" durchplastifiziert wird und mit geringem Kraftaufwand umgeformt wird. Dabei fließt der den Nietdom 20 bildende Kunststoff in einer geringen Schichtdicke nach außen weg. Im Verlauf des weiteren Schweißprozesses wird der plastifizierte Kunststoff in die Ausformung 14 der Kalotte 10 gepresst und in deren Bereich in einen breiförmigen Zustand überführt.

In diesem breiförmigen Zustand wird der Kunststoff dann mit der Kalotte 10 beispielsweise zu einem solchen Nietkopf 24 geformt, wie er sich aus der Fig. 3 ergibt. Bei diesem bekannten Verfahren verbindet sich der Nietkopf 24 aufgrund der breiförmigen Konsistenz jedoch nicht mit der Umfangsfläche des Nietdoms innerhalb des Nietkopfs. Damit ergibt sich nach dem vollständigen Erkalten des Nietkopfs 24 eine nur wenige Zehntel Millimeter dünne kraftschlüssige Schicht, die bei einem Abzugsversuch abgeschert wird. Entsprechend gering sind die betreffenden Abzugskräfte. Wie anhand der Fig. 3 zu erkennen ist, verbleibt zwischen dem Nietdom 20 und dem Gegenstand 18 ein Spalt, was zur Folge hat, dass die Verbindung nicht klapperfrei ist.

Der Erfindung liegt die Aufgabe zugrunde, ein verbessertes Verfahren sowie eine verbesserte Vorrichtung der eingangs genannten Art zu schaffen, mit denen die zuvor genannten Nachteile beseitigt sind. Dabei soll insbesondere erreicht werden, dass sich höhere Abzugskräfte ergeben. Bezüglich des Verfahrens wird diese Aufgabe erfindungsgemäß dadurch gelöst, dass mit dem Nachführen des Bearbeitungselements über dessen in den Hohlraum des Nietdoms eintretenden Zapfen auf den Nietdom allgemein quer zur Nachführrichtung eine von innen nach außen gerichtete Spreizwirkung ausgeübt und der Nietdom zur Formung des Nietkopfes in teigigem Zustand umgebördelt wird.

Infolge der ausgehend vom Innendurchmesser des Nietdoms ringförmigen Spreizwirkung auf den Nietdom in Verbindung mit einer gegenüber dem bekannten Verfahren geringeren Erwärmung des Nietdoms und einem entsprechend höheren Kraftaufwand zum Nachführen des Bearbeitungselements wird der Nietdom anders als beim bekannten Verfahren nicht mehr abgeschmolzen, sondern in teigigem Zustand umgebördelt und dadurch zum Nietkopf geformt. Aufgrund dieses Umbördelvorgangs ergibt sich eine wesentlich dickere kraftschlüssige Schicht, so dass der Nietkopf bei einer Abzugsbelastung nicht abgeschert, sondern abgerissen wird, was wesentlich höhere Abzugskräfte mit sich bringt. Im Verlauf der Nachführbewegung des Bearbeitungselements wird das teigige Material zudem in den eventuell noch vorhandenen Luftspalt zwischen dem oberen Gegenstand und dem Nietdom gedrückt, wodurch dieser zentral verklemmt und eine rüttelfreie Verbindung erreicht wird.

Der Nietdom wird also bevorzugt nur so weit erwärmt, dass er in den teigigen Zustand übergeht und ein Abschmelzen verhindert wird.

Zweckmäßigerweise wird der Nietdom in Abhängigkeit vom Nietdommaterial bis zu einer Temperatur im Bereich von etwa 170 bis etwa 250°C erwärmt, wobei die jeweilige Temperatur jedoch unter der Schmelztemperatur des Nietdommaterials liegen soll.

Die Kraft, mit der das Bearbeitungselement gegen den Nietdom gepresst wird, wird im Vergleich zum bekannten Verfahren entsprechend höher gewählt, so dass das an den Nietdom angelegte Bearbeitungselement dem seinen teigförmigen Zustand annehmenden Nietdom nachgeführt und der Nietdom in diesem teigförmigem Zustand umgebördelt wird.

Bevorzugt wird der Nietkopf an einem zumindest im Wesentlichen kreiszylindrischen Nietdom ausgebildet, wozu ein Bearbeitungselement mit einem rotationssymmetrischen Zapfen und einer rotationssymmetrischen ringförmigen Ausnehmung verwendet wird. Grundsätzlich ist jedoch auch ein Bearbeitungselement mit einem im Querschnitt länglichen Zapfen und einer entsprechend länglichen ringförmigen Ausnehmung zur Ausbildung des Nietkopfs an einem im Querschnitt länglichen Nietdom denkbar.

Gemäß einer vorteilhaften praktischen Ausgestaltung des erfindungsgemäßen Verfahrens wird als Bearbeitungselement eine erwärmbare Kalotte verwendet. Dabei kann die Erwärmung einer solchen Kalotte beispielsweise mit Hilfe eines ihr nachführbaren Heizelements erfolgen, wie dies in der EP 1 661 689 A2 beschrieben ist. Die Kalotte wird zweckmäßigerweise erst nach einem Abkühlen des Nietkopfs von diesem abzogen. Zur Beschleunigung der Abkühlung kann vor dem Abziehen der Kalotte vom Nietkopf das Heizelement von der Kalotte getrennt werden.

Gemäß einer alternativen vorteilhaften Ausgestaltung des erfindungsgemäßen Verfahrens wird als Bearbeitungselement eine Sonotrode verwendet. Eine solche Sonotrode kann zusammen mit einem Konverter ein Schwinggebilde bilden. Dabei wird die Sonotrode über den beispielsweise aus einem piezoelektrischen Kristall bestehenden Konverter zu Ultraschallschwingungen angeregt, über die der Nietdom dann entsprechend erwärmt wird.

Eine weitere bevorzugte Ausgestaltung des erfindungsgemäßen Verfahrens zeichnet sich dadurch aus, dass die Erwärmung des vorzugsweise durch eine erwärmbare Kalotte gebildeten Bearbeitungselements mittels eines dem Bearbeitungselement nachführbaren Heizelementes erfolgt und das Heizelement zur Beschleunigung der Abkühlung vor dem Abziehen des Bearbeitungselements vom Nietkopf von diesem getrennt wird. Dabei ist es von Vorteil, wenn das Bearbeitungselement nach der Trennung vom Heizelement und vor dem Abziehen vom Nietkopf mit einem beispielsweise gasförmigen Kühlmedium gekühlt wird.

Damit kann der Schweißprozess mit einem verhältnismäßig geringen aparativen Aufwand und mit hoher Prozessgeschwindigkeit, das heißt mit kürzeren Zyklusdauern als bisher sowohl für die Plastifizierungsphasen als auch für die nachfolgenden Abkühlungsphasen durchgeführt werden. Das vorzugsweise in Form einer Kalotte vorgesehene Bearbeitungselement kann ein vergleichsweise kleines Volumen bzw. eine kleine Masse erhalten. Dennoch ist einerseits eine schnelle Plastifizierung der Nietdome dadurch möglich, dass ein ausreichend leistungsstarkes Heizelement zumindest in die Nähe der Kalotte gebracht oder an diese angelegt wird, während andererseits auch eine schnelle Abkühlung der Kalotte und damit der hergestellten Nietköpfe erreicht werden kann, insbesondere indem das Heizelement während oder unmittelbar nach der Ausformung der Nietköpfe von der Kalotte entfernt wird.

Eine solche Erwärmung bzw. Abkühlung der Kalotte ist als solche aus der DE 10 2004 057 453 B3 bekannt. Auch im Übrigen kann die Erwärmung des Bearbeitungselements bzw. der Kalotte sowie deren Kühlung so vorgesehen sein, wie dies in der DE 10 2004 057 453 B3 beschrieben ist, die hiermit in den Offenbarungsgehalt der vorliegenden Anmeldung mit eingeschlossen wird.

Die erfindungsgemäße Vorrichtung zeichnet sich entsprechend dadurch aus, dass der Zapfen und die diesen umgebende ringförmige Ausnehmung des Bearbeitungselements so ausgeführt sind, dass beim Nachführen des an den Nietdom angelegten Bearbeitungselements auf den erwärmten, einen teigförmigen Zustand aufweisenden Nietdom allgemein quer zur Längsrichtung des Nietdoms eine von innen nach außen gerichtete Spreizwirkung ausgeübt und der Nietdom zur Formung des Nietkopfes in teigigem Zustand umgebördelt wird.

Bevorzugt besitzt das Bearbeitungselement auf seiner Bearbeitungsseite eine die Ausnehmung ringförmig umgebende Auflagefläche, mit der es am Ende seiner Nachführbewegung auf einem der miteinander zu verbindenden Gegenstände aufliegt.

Dabei springt der Zapfen des Bearbeitungselements zweckmäßigerweise über die Ebene dieser Auflagefläche hinaus vor.

Das Bearbeitungselement ist bevorzugt rotationssymmetrisch ausgeführt.

Eine bevorzugte praktische Ausführungsform der erfindungsgemäßen Vorrichtung zeichnet sich dadurch aus, dass der Zapfen ausgehend von seinem über die Ebene der Auflagefläche hinaus vorspringenden äußeren Ende einen nach innen zunehmend größer werdenden Außendurchmesser besitzt.

Während der Außendurchmesser des Zapfens in der Ebene der Auflagefläche zumindest im Wesentlichen gleich dem Innendurchmesser des hohlzylindrischen Nietdoms oder auch etwas kleiner als dieser sein kann, ist der Außendurchmesser des Zapfens zumindest in dem in Längsrichtung des Nietdoms betrachtet innerhalb der Ebene der Auflagefläche liegenden Bereich bevorzugt größer als der Innendurchmesser des hohlzylindrischen Nietdoms, wodurch beim Nachführen des Bearbeitungselements die Spreizwirkung auf den Nietdom erzielt wird.

Der Zapfen kann zumindest abschnittsweise eine konische oder kegelstumpfartige Form besitzen.

Vorteilhafterweise schließt hierbei die Umfangsfläche des konischen oder kegelstumpfartigen Abschnitts des Zapfens mit der Längsrichtung des Nietdoms einen Winkel im Bereich von etwa 15° ein.

Bevorzugt geht der Zapfen über einen gekrümmten Wandabschnitt in den Boden der ringförmigen Vertiefung über.

Zudem kann der Boden der ringförmigen Vertiefung über einen gekrümmten Wandabschnitt in die die Vertiefung nach außen begrenzende, an die Auflagefläche anschließende Wand übergehen.

Bevorzugt ist die Breite des die maximale Tiefe der ringförmigen Ausnehmung bestimmenden, zumindest im Wesentlichen ebenen Bodens der Ausnehmung größer als der Außendurchmesser des Zapfens in der Ebene der Auflagefläche.

Von Vorteil ist insbesondere auch, wenn die die Ausnehmung nach außen begrenzende Wand im Bereich der Auflagefläche bezüglich der Längsrichtung des Nietdoms um einen Winkel im Bereich von etwa 15° nach außen geneigt ist.

Zweckmäßigerweise ist in der Ebene der Auflagefläche betrachtet die Breite der ringförmigen Ausnehmung größer als der Durchmesser des Zapfens. Dabei kann in dieser Ebene der Auflagefläche betrachtet die Breite der ringförmigen Ausnehmung insbesondere zumindest doppelt und vorzugsweise zumindest dreimal so groß sein wie der Durchmesser des Zapfens.

Von Vorteil ist insbesondere auch, wenn die ausgehend von der Ebene der Auflagefläche gemessene maximale Tiefe der Ausnehmung größer ist als die Höhe des über die Ebene der Auflagefläche hinaus vorspringenden Teils des Zapfens.

Das Verhältnis zwischen der maximalen Tiefe der Ausnehmung und der Höhe des über die Ebene der Auflagefläche hinaus vorspringenden Teils des Zapfens liegt bevorzugt in einem Bereich zwischen etwa 1,4 und etwa 1,7.

Zweckmäßigerweise sind Mittel vorgesehen, um die Erwärmung des Nietdoms so zu steuern und/oder zu regeln, dass dieser nur so weit erwärmt wird, dass er in den teigigen Zustand übergeht und ein Abschmelzen verhindert wird.

Zweckmäßigerweise können insbesondere auch Mittel vorgesehen sein, um die Kraft, mit der das Bearbeitungselement gegen den Nietdom gepresst wird, so zu steuern und/oder zu regeln, dass das an den Nietdom angelegte Bearbeitungselement dem seinen teigförmigen Zustand annehmenden Nietdom nachgeführt und der Nietdom in diesem teigförmigen Zustand umgebördelt wird.

Gemäß einer bevorzugten Ausführungsform der erfindungsgemäßen Vorrichtung ist das Bearbeitungselement zur Ausbildung des Nietkopfs an einem zumindest im Wesentlichen kreiszylindrischen Nietdom mit einem rotationssymmetrischen Zapfen und einer rotationssymmetrischen ringförmigen Ausnehmung versehen. Wie bereits erwähnt, ist grundsätzlich jedoch auch ein Bearbeitungselement mit einem im Querschnitt länglichen Zapfen und einer entsprechend länglichen Ausnehmung zur Ausbildung eines im Querschnitt länglichen Nietkopfs denkbar.

Bevorzugt ist das Bearbeitungselement durch eine erwärmbare Kalotte oder dergleichen gebildet.

Gemäß einer alternativen vorteilhaften Ausführungsform kann das Bearbeitungselement jedoch auch durch eine Sonotrode gebildet sein.

Eine bevorzugte praktische Ausführungsform der erfindungsgemäßen Vorrichtung zeichnet sich dadurch aus, dass das vorzugsweise durch eine erwärmbare Kalotte gebildete Bearbeitungselement einem in Richtung des Nietdoms vor und zurück bewegbaren Nietwerkzeug zugeordnet ist, das zudem ein zur Erwärmung des Bearbeitungselements bestimmtes Heizelement umfasst, das relativ zum Bearbeitungselement bewegbar ist. Dabei ist das Heizelement bevorzugt als Wärmespeicher ausgebildet. Vorteilhafterweise sind zudem Mittel zur Kühlung des Bearbeitungselements vorgesehen.

Ein entsprechendes Heizelement sowie entsprechende Kühlmittel sind bereits aus der DE 10 2004 057 453 B3 bekannt. Auch im Übrigen können die Mittel zur Erwärmung bzw. Kühlung des Bearbeitungselements so ausgeführt sein, wie dies in dieser DE 10 2004 057 453 B3 beschrieben ist, die hiermit in den Offenbarungsgehalt der vorliegenden Anmeldung mit einbezogen wird.

Die Erfindung wird im Folgenden anhand eines Ausführungsbeispiels unter Bezugnahme auf die Zeichnung näher erläutert; in dieser zeigen:
- Fig. 1: eine schematische geschnittene Darstellung einer her- kömmlichen erwärmbaren Kalotte,
- Fig. 2: eine schematische geschnittene Darstellung zweier miteinander zu verbindender Gegenstände, wobei ein dem einen Gegenstand zugeordneter Nietdom durch eine Öffnung des anderen Gegenstandes hindurch- gesteckt ist,
- Fig. 3: eine mit der herkömmlichen Kalotte gemäß Fig. 1 nach einem herkömmlichen Verfahren hergestellte Verbin- dung zwischen den beiden Gegenständen,

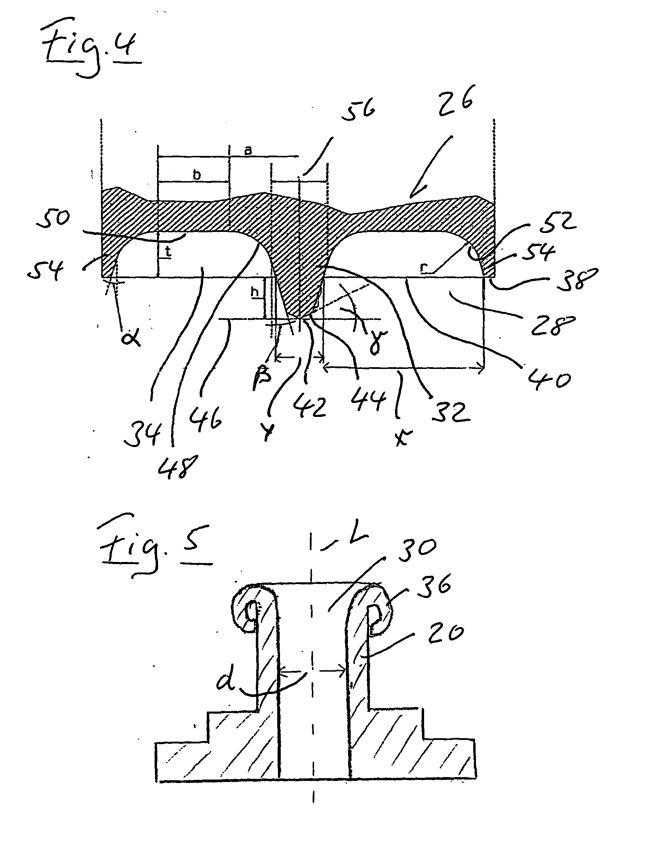

- Fig. 4: eine schematische geschnittene Darstellung einer bei- spielhaften Ausführungsform des erfindungsgemäßen Bearbeitungselements,
- Fig. 5: eine schematische geschnittene Darstellung eines bei- spielsweise mittels des Bearbeitungselements gemäß Fig. 4 nach dem erfindungsgemäßen Verfahren an ei- nem Nietdom ausgebildeten Nietkopfs und

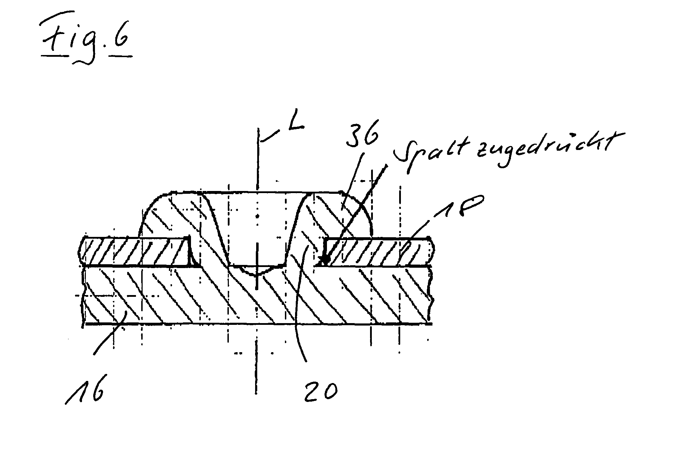

- Fig. 6: eine mit einer erfindungsgemäßen Kalotte bzw. nach dem erfindungsgemäßen Verfahren hergestellte Ver- bindung zwischen den beiden Gegenständen.

Fig. 4 zeigt in schematischer geschnittener Darstellung eine beispielhafte Ausführungsform eines erfindungsgemäßen Bearbeitungselements 26 einer Vorrichtung zum Verbinden von Gegenständen 16, 18 (vgl. auch Fig. 2) mittels wenigstens eines plastifizierbaren hohlzylindrischen Nietdoms 20 (vgl. auch Fig. 5).

Dieses Bearbeitungselement 26 ist in Längsrichtung L des hohlzylindrischen Nietdoms 20 verfahrbar und in dieser Richtung gegen den Nietdom 20 pressbar. Dabei ist der Nietdom 20 durch Anlegen des Bearbeitungselements 26 erwärmbar.

Wie anhand der Fig. 4 zu erkennen ist, ist das Bearbeitungselement 26 auf seiner auf den hohlzylindrischen Nietdom 20 aufsetzbaren Bearbeitungsseite 28 mit einem in den Hohlraum 30 des Nietdoms 20 einführbaren Zapfen 32 und einer diesen umgebenden ringförmigen Ausnehmung 34 versehen. An dem Nietdom 20 wird dann durch Anlegen und Nachführen des Bearbeitungselements 26 ein Nietkopf 36 (vgl. Fig. 5) ausgebildet. Anschließend wird das Bearbeitungselement 26 von dem Nietkopf 36 abgezogen.

Gemäß dem erfindungsgemäßen Verfahren wird mit dem Nachführen des Bearbeitungselements 26 über dessen in den Hohlraum 30 des Nietdoms 20 eintretenden Zapfen 32 auf den Nietdom 20 allgemein quer zur Nachführrichtung, d.h. allgemein quer zur Längsrichtung L des Nietdoms 20, eine von innen nach außen gerichtete Spreizwirkung ausgeübt und der Nietdom 20 zur Formung des Nietkopfs 36 in teigigem Zustand umgebördelt. Der Nietdom 20 wird also nur so weit erwärmt, dass er in den teigigen Zustand übergeht und ein Abschmelzen verhindert wird. Dabei kann der Nietdom 20 in Abhängigkeit von dessen Material insbesondere bis zu einer Temperatur im Bereich von etwa 170 bis etwa 250°C erwärmt werden.

Die Kraft, mit der das Bearbeitungselement 26 gegen den Nietdom 20 gepresst wird, wird so hoch gewählt, dass das an dem Nietdom 20 angelegte Bearbeitungselement 26 bei seinen teigförmigen Zustand annehmendem Nietdom 20 nachgeführt und der Nietdom 20 in diesem teigförmigen Zustand umgebördelt wird (vgl. Fig. 5).

Beim vorliegenden Ausführungsbeispiel wird der Nietkopf 36 an einem zumindest im Wesentlichen kreiszylindrischen Nietdom 20 ausgebildet, wozu das Bearbeitungselement 26 mit einem rotationssymmetrischen Zapfen 32 und einer rotationssymmetrischen ringförmigen Ausnehmung 34 versehen ist. Auch im Übrigen ist das Bearbeitungselement 26 im vorliegenden Fall vorzugsweise rotationssymmetrisch ausgeführt.

Bei dem Bearbeitungselement 36 kann es sich beispielsweise um eine erwärmbare Kalotte oder beispielsweise auch um eine Sonotrode handeln.

Der Zapfen 32 und die diesen umgebende ringförmige Ausnehmung 34 des Bearbeitungselements 26 sind also so ausgeführt, dass beim Nachführen des an den Nietdom 20 angelegten Bearbeitungselements 26 auf den erwärmten, einen teigförmigen Zustand aufweisenden Nietdom 20 allgemein quer zur Längsrichtung L des Nietdoms 20 eine von innen nach außen gerichtete Spreizwirkung ausgeübt und der Nietdom 20 zur Formung des Nietkopfs 36 in teigigem Zustand umgebördelt wird.

Wie anhand der Fig. 4 zu erkennen ist, besitzt das Bearbeitungselement 36 auf seiner Bearbeitungsseite 28 eine die Ausnehmung 34 ringförmig umgebende Auflagefläche 38, mit der es am Ende seiner Nachführbewegung auf einem der miteinander zu verbindenden Gegenstände 16, 18, d.h. im Fall der Fig. 2 auf dem oberen Gegenstand 18 aufliegt.

Der Zapfen 32 des Bearbeitungselements 26 springt um den Betrag h über die Ebene 40 der Auflagefläche 38 vor.

Zudem besitzt der Zapfen 32 des hier z.B. rotationssymmetrisch ausgeführten Bearbeitungselements 26 ausgehend von seinem über die Ebene 40 der Auflagefläche 38 hinaus vorspringenden äußeren Ende 42 einen nach innen, d.h. in der Darstellung gemäß Fig. 4 nach oben größer werdenden Außendurchmesser. Dabei kann dieser Außendurchmesser des Zapfens 32 in der Ebene 40 der Auflagefläche 38 zumindest im Wesentlichen gleich dem Innendurchmesser d des hohlzylindrischen Nietdoms 20 sein.

Wie anhand der Fig. 4 zu erkennen ist, ist der Außendurchmesser des Zapfens 32 zumindest in dem in Längsrichtung L des Nietdoms 20 betrachtet innerhalb der Ebene 40 der Auflagefläche 38 liegenden Bereich, d.h. in der Darstellung der Fig. 4 oberhalb der Ebene 40, größer als der Innendurchmesser des hohlzylindrischen Nietdoms, wodurch sich beim Nachführen des Bearbeitungselements 26 die zuvor erwähnte Spreizwirkung ergibt.

Wie ebenfalls wieder der Fig. 4 entnommen werden kann, kann der Zapfen 32 zumindest abschnittsweise eine konische oder kegelstumpfartige Form besitzen. Beim vorliegenden Ausführungsbeispiel schließt die Umfangsfläche des konischen oder kegelstumpfartigen Abschnitts des Zapfens 32 mit der Längsrichtung L des Nietdoms 20 einen Winkel β im Bereich von etwa 15° ein.

Im Bereich des äußeren Endes 42 kann der Zapfen 32 mit einer ringförmigen Abschrägung 44 versehen sein, die beim vorliegenden Ausführungsbeispiel mit der Horizontalen 46 beispielsweise einen Winkel γ im Bereich von 28° einschließen kann.

Der Zapfen 32 geht über einen gekrümmten Wandabschnitt 48 in den Boden 50 der ringförmigen Vertiefung 34 über.

Der Boden 50 der ringförmigen Vertiefung 34 geht über einen gekrümmten Wandabschnitt 52 in die die Vertiefung 34 nach außen begrenzende, an die Auflagefläche 38 anschließende Wand 54 über.

Die Breite b des die maximale Tiefe t der ringförmigen Ausnehmung 34 bestimmenden, zumindest im Wesentlichen ebenen Bodens 50 der Ausnehmung 34 ist größer als der Außendurchmesser des Zapfens 32 in der Ebene 40 der Auflagefläche 38.

Die die Ausnehmung 34 nach außen begrenzende Wand 54 kann im Bereich der Auflagefläche 38 bezüglich der Längsrichtung L des Nietdoms 20 beispielsweise um einen Winkel α im Bereich von etwa 15° nach außen geneigt sein.

Wie der Fig. 4 zudem entnommen werden kann, ist in der Ebene 40 der Auflagefläche 38 betrachtet die Breite der ringförmigen Ausnehmung 34 größer als der Durchmesser des Zapfens 32. Dabei kann in der Ebene 40 der Auflagefläche 38 betrachtet die Breite der ringförmigen Ausnehmung 34 insbesondere zumindest doppelt und vorzugsweise zumindest dreimal so groß sein wie der Durchmesser des Zapfens 32.

Beim vorliegenden Ausführungsbeispiel ist zudem die ausgehend von der Ebene 40 der Auflagefläche 38 gemessene maximale Tiefe t der Ausnehmung 34 größer als die Höhe h des über die Ebene 40 der Auflagefläche 38 hinaus vorspringenden Teils des Zapfens 32. Dabei kann das Verhältnis zwischen der maximalen Tiefe t der Ausnehmung 34 und der Höhe h des über die Ebene 40 der Auflagefläche 38 hinaus vorspringenden Teils des Zapfens 32 insbesondere in einem Bereich zwischen etwa 1,4 und etwa 1,7 liegen.

Die betreffende Vorrichtung zum Verbinden der Gegenstände 16, 18 kann insbesondere Mittel umfassen, um die Erwärmung des Nietdoms 20 so zu steuern und/oder zu regeln, dass dieser nur so weit erwärmt wird, dass er in den teigigen Zustand übergeht und ein Abschmelzen verhindert wird. Zudem kann die Vorrichtung Mittel umfassen, um die Kraft, mit der das Bearbeitungselement 26 gegen den Nietdom 20 gepresst wird, so zu steuern und/oder zu regeln, dass das an dem Nietdom 20 angelegte Bearbeitungselement 26 bei seinen teigförmigen Zustand annehmendem Nietdom 20 nachgeführt und der Nietdom 20 in diesem teigförmigem Zustand umgebördelt wird.

Der Krümmungsradius r des gekrümmten Wandabschnitts 52 kann beispielsweise im Bereich von 2 mm liegen. Die maximale Tiefe t der Ausnehmung 34 oder Zustelltiefe kann beispielsweise in einem Bereich von etwa 1,8 mm bis etwa 2,05 mm liegen. Die Breite b des Bodens 50 oder Ausdrehwegs kann beispielsweise in einem Bereich von etwa 0,17 bis etwa 1,35 mm liegen. Der Durchmesser y des Zapfens 32 in der Ebene 40 der Auflagefläche 38 kann beispielsweise in einem Bereich von etwa 3,9 bis etwa 5,5 mm liegen. Die in Radialrichtung gemessene, durch die Differenz zwischen dem Außenradius und dem Innenradius bestimmte Breite x der ringförmigen Ausnehmung 34 in der Ebene 40 der Auflagefläche 38 als Kontrollmaß für den Durchmesser des Nietkopfs kann beispielsweise in einem Bereich von etwa 13,3 bis 15,8 mm liegen. Der Abstand a zwischen dem Zentrum 56 und dem Übergangsbereich zwischen dem Boden 50 und dem gekrümmten Wandabschnitt 52 kann beispielsweise in einem Bereich von etwa 4,6 bis etwa 5,8 mm liegen. Das Volumen des Bearbeitungselements 26 oder der ringförmigen Vertiefung 34 kann beispielsweise in einem Bereich zwischen etwa 170 und etwa 300 mm³ liegen. Die angegebenen Werte sind jedoch rein beispielhaft und abhängig unter anderem von den jeweiligen Abmessungen des Nietdoms und des auszubildenden Nietkopfs sowie vom Material des Nietdoms.

In der folgenden Tabelle 1 sind einige Abmessungsbeispiele für eine runde Nietkalotte wiedergegeben:

**Tabelle 1**

| Kalotte | Volumen | Parameter | | | | | | |
|---|---|---|---|---|---|---|---|---|
| | | x | y | r | t | a | b | H |
| 6 | 298 mm³ | 15,74 | 4,70 | 2,00 | 2,05 | 5,79 | 1,35 | 1,26 |

Zur Ermittlung, ob bei Nietdomdurchmessern von beispielsweise 8 mm bei einer Nietdomlänge von beispielsweise 9 mm beispielsweise Taktzeiten von ≤ 38 s und Festigkeiten von ≥ 300 N mit einer erwärmbaren Kalotte erreicht werden können, wurden Schweißversuche durchgeführt.

Die Anforderungen wurden mit Abstand erfüllt, wobei Schweißzeiten von < 30 s und Zugfestigkeiten von > 400 N erreicht wurden.

Dabei wurde vorausgesetzt, dass sich die Taktzeit durch die Summe aus der Schweißzeit und der Maschinenzeit (z.B. Drehteller drehen usw.) zusammensetzt.

Dabei ist im Folgenden mit "D" jeweils der Außendurchmesser, mit "d" jeweils der Innendurchmesser und mit "L" jeweils die Länge des betreffenden Nietdoms bezeichnet.

**Tabelle 2**

| | | | | | |
|---|---|---|---|---|---|
| Werkstoff: Schulablend (ABS/PA) M/MK 2004 | | | | | |
| Nietdom: D = 8 mm/d = 5,5 mm | | | | | |
| Kalotte 6: t = 2,05 mm/2x + y = 15,74 mm (Tiefe/Außendurchmesser) | | | | | |

| Schweiß-Temperatur | Schweiß-Druck | Haltezeit | Kühlzeit | Schweiß-Zeit | Zugversuch |
|---|---|---|---|---|---|
| 220°C | 4,4 bar | 5 s | 10 s | 27,4 s | 480 N |
| | | | | 27,4 s | 442 N |
| | | | | 27,5 s | 560 N |
| | | | | 27,5 s | 585 N |
| | | | | 27,6 s | 501 N |

Versuche wurden mit verschiedenen Nietdomdurchmessern (4 - 8 mm), verschiedenen, auch glasfaserhaltigen Materialen und verschiedenen Längen durchgeführt. Sie beeinflussen die Parameter Kraft und Temperatur und führen entsprechend auch zu unterschiedlichen Schweißzeiten.

Die Schweißkraft lag bei den Versuchen im Wesentlichen in Abhängigkeit vom Material und Durchmesser zwischen 200 und 600 N. Eine zu hohe Schweißkraft führt zum Reißen des Nietdoms und damit zu reduzierten und unkontrollierten Abzugskräften.

Fig. 6 zeigt eine mit einer erfindungsgemäßen Kalotte 26 bzw. nach dem erfindungsgemäßen Verfahren hergestellte Verbindung zwischen den beiden Gegenständen 16, 18. Wie sich aus dieser Fig. 6 ergibt, ist aufgrund der erfindungsgemäßen Spreizung der Spalt zwischen dem Nietdom 20 und dem Gegenstand 18 zugedrückt, wodurch eine klapperfreie Verbindung sichergestellt ist.

### Bezugszeichenliste

- 10: Kalotte
- 12: Zapfen
- 14: ringförmige Ausnehmung
- 16: Gegenstand
- 18: Gegenstand
- 20: Nietdom
- 22: Öffnung
- 24: Nietkopf
- 26: Bearbeitungselement, Kalotte, Sonotrode
- 28: Bearbeitungsseite
- 30: Hohlraum
- 32: Zapfen
- 34: ringförmige Ausnehmung
- 36: Nietkopf
- 38: Auflagefläche
- 40: Ebene
- 42: äußeres Ende
- 44: Abschrägung
- 46: Horizontale
- 48: gekrümmter Wandabschnitt
- 50: Boden
- 52: gekrümmter Wandabschnitt
- 54: Wand
- 56: Zentrum
- L: Längsrichtung

## Patentansprüche

1. Verfahren zum Verbinden von Gegenständen (16, 18) mittels wenigstens eines plastifizierbaren hohlzylindrischen Nietdoms (20), wobei der Nietdom (20) durch Anlegen eines Bearbeitungselements (26) erwärmbar ist, das auf seiner auf den hohlzylindrischen Nietdom (20) aufzusetzenden Bearbeitungsseite (28) mit einem in den Hohlraum (30) des Nietdoms (20) einführbaren Zapfen (32) und einer diesen umgebenden ringförmigen Ausnehmung (34) versehen ist, an dem Nietdom (20) durch Anlegen und Nachführen des Bearbeitungselements (26) ein Nietkopf (36) ausgebildet und das Bearbeitungselement (26) anschließend von dem gebildeten Nietkopf (36) abgezogen wird,
**dadurchgekennzeichnet,**
**dass** mit dem Nachführen des Bearbeitungselements (26) über dessen in den Hohlraum (30) des Nietdoms (20) eintretenden Zapfen (32) auf den Nietdom (20) allgemein quer zur Nachführrichtung eine von innen nach außen gerichtete Spreizwirkung ausgeübt und der Nietdom (20) zur Formung des Nietkopfes (36) in teigigem Zustand umgebördelt wird.

2. Verfahren nach Anspruch 1,
**dadurchgekennzeichnet,**
**dass** der Nietdom (20) nur soweit erwärmt wird, dass er in den teigigen Zustand übergeht und ein Abschmelzen verhindert wird,
wobei vorzugsweise der Nietdom (20) über das Bearbeitungselement (26) in Abhängigkeit vom Nietdommaterial bis zu einer Temperatur im Bereich von etwa 170 bis etwa 250 °C erwärmt wird.

3. Verfahren nach einem der vorhergehenden Ansprüche,
**dadurch gekennzeichnet,**
**dass** die Kraft, mit der das Bearbeitungselement (26) gegen den Nietdom (20) gepresst wird, so hoch gewählt wird, dass das an den Nietdom (20) angelegte Bearbeitungselement (26) dem seinen teigförmigen Zustand annehmenden Nietdom (20) nachgeführt und der Nietdom (20) in diesem teigförmigen Zustand umgebördelt wird, und/oder
**dass** der Nietkopf (36) an einem zumindest im Wesentlichen kreiszylindrischen Nietdom (20) ausgebildet und hierzu ein Bearbeitungselement (26) mit einem rotationssymmetrischen Zapfen (32) und einer rotationssymmetrischen ringförmigen Ausnehmung (34) verwendet wird, und/oder
**dass** als Bearbeitungselement (26) eine erwärmbare Kalotte oder eine Sonotrode verwendet wird.

4. Verfahren nach einem der vorhergehenden Ansprüche,
**dadurch gekennzeichnet,**
**dass** die Erwärmung des vorzugsweise durch eine erwärmbare Kalotte gebildeten Bearbeitungselements (26) mittels eines dem Bearbeitungselement (26) nachführbaren Heizelementes erfolgt und das Heizelement zur Beschleunigung der Abkühlung vor dem Abziehen des Bearbeitungselements (26) vom Nietkopf (36) von diesem getrennt wird,
wobei vorzugsweise das Bearbeitungselement (26) nach der Trennung vom Heizelement und vor dem Abziehen vom Nietkopf (36) mit einem insbesondere gasförmigen Kühlemedium gekühlt wird.

5. Vorrichtung zum Verbinden von Gegenständen (16, 18) mittels wenigstens eines plastifizierbaren hohlzylindrischen Nietdoms (20), mit einem in Längsrichtung (L) des hohlzylindrischen Nietdoms (20) verfahrbaren und gegen diesen pressbaren Bearbeitungselement (26), über das der Nietdom (20) erwärmbar ist und das zur Ausbildung eines Nietkopfes (36) an dem Nietdom (20) auf seiner mit diesem in Eingriff bringbaren Bearbeitungsseite (28) mit einem in den Hohlraum (30) des Nietdoms (20) einführbaren Zapfen (32) und einer diesen umgebenden ringförmigen Ausnehmung (34) versehen ist, insbesondere zur Durchführung des Verfahrens nach einem der vorhergehenden Ansprüche,
**dadurchgekennzeichnet,**
**dass** der Zapfen (32) und die diesen umgebende ringförmige Ausnehmung (34) des Bearbeitungselements (26) so ausgeführt sind, dass beim Nachführen des an den Nietdom (20) angelegten Bearbeitungselements (26) auf den erwärmten, einen teigförmigen Zustand aufweisenden Nietdom (20) allgemein quer zur Längsrichtung (L) des Nietdoms (20) eine von innen nach außen gerichtete Spreizwirkung ausgeübt und der Nietdom (20) zur Formung des Nietkopfes (36) in teigigem Zustand umgebördelt wird.

6. Vorrichtung nach Anspruch 5,
**dadurchgekennzeichnet,**
**dass** das Bearbeitungselement (36) auf seiner Bearbeitungsseite (28) eine die Ausnehmung (34) ringförmig umgebende Auflagefläche (38) besitzt, mit der es am Ende seiner Nachführbewegung auf einem (18) der miteinander zu verbindenden Gegenstände (16, 18) aufliegt,
wobei vorzugsweise der Zapfen (32) des Bearbeitungselements (26) über die Ebene (40) der Auflagefläche (38) hinaus vorspringt.

7. Vorrichtung nach einem der vorhergehenden Ansprüche,
**dadurch gekennzeichnet,**
**dass** das Bearbeitungselement (26) rotationssymmetrisch ausgeführt ist, und/oder
**dass** der Zapfen (32) ausgehend von seinem über die Ebene (40) der Auflagefläche (38) hinaus vorspringenden äußeren Ende (42) einen nach innen zunehmend größer werdenden Außendurchmesser besitzt, und/oder
**dass** der Außendurchmesser des Zapfens (32) in der Ebene (40) der Auflagefläche (38) zumindest im Wesentlichen gleich dem Innendurchmesser (d) des hohlzylindrischen Nietdoms (20) ist, und/oder dass der Außendurchmesser des Zapfens (32) zumindest in dem in Längsrichtung (L) des Nietdoms (20) betrachtet innerhalb der Ebene (40) der Auflagefläche (38) liegenden Bereich größer ist als der Innendurchmesser des hohlzylindrischen Nietdoms (20).

8. Vorrichtung nach einem der vorhergehenden Ansprüche,
**dadurch gekennzeichnet,**
**dass** der Zapfen (32) zumindest abschnittsweise eine konische oder kegelstumpfartige Form besitzt, und/oder
**dass** die Umfangsfläche des konischen oder kegelstumpfartigen Abschnitts des Zapfens (32) mit der Längsrichtung (L) des Nietdoms (20) einen Winkel (β) im Bereich von etwa 15° einschließt, und/oder
**dass** der Zapfen (32) über einen gekrümmten Wandabschnitt (48) in den Boden (50) der ringförmigen Vertiefung (34) übergeht, und/oder
**dass** der Boden (50) der ringförmigen Vertiefung (34) über einen gekrümmten Wandabschnitt (52) in die die Vertiefung (34) nach außen begrenzende, an die Auflagefläche (38) anschließende Wand (54) übergeht.

9. Vorrichtung nach einem der vorhergehenden Ansprüche,
**dadurch gekennzeichnet,**
**dass** die Breite (b) des die maximale Tiefe (t) der ringförmigen Ausnehmung (34) bestimmenden, zumindest im Wesentlichen ebenen Bodens (50) der Ausnehmung (34) größer ist als der Außendurchmesser des Zapfens (32) in der Ebene (40) der Auflagefläche (38), und/oder
**dass** die die Ausnehmung (34) nach außen begrenzende Wand (54) im Bereich der Auflagefläche (38) bezüglich der Längsrichtung (L) des Nietdoms (20) um einen Winkel (α) im Bereich von etwa 15° nach außen geneigt ist, und/oder
**dass** in der Ebene (40) der Auflagefläche (38) betrachtet die Breite der ringförmigen Ausnehmung (34) größer ist als der Durchmesser des Zapfens (32), wobei vorzugsweise in der Ebene (40) der Auflagefläche (38) betrachtet die Breite (x) der ringförmigen Ausnehmung (34) zumindest doppelt und vorzugsweise zumindest dreimal so groß ist wie der Durchmesser des Zapfens (32).

10. Vorrichtung nach einem der vorhergehenden Ansprüche,
**dadurch gekennzeichnet,**
**dass** die ausgehend von der Ebene (40) der Auflagefläche (38) gemessene maximale Tiefe (t) der Ausnehmung (34) größer ist als die Höhe (h) des über die Ebene (40) der Auflagefläche (38) hinaus vorspringenden Teils des Zapfens (32), und/oder dass das Verhältnis zwischen der maximalen Tiefe (t) der Ausnehmung (34) und der Höhe (h) des über die Ebene (40) der Auflagefläche (38) hinaus vorspringenden Teils des Zapfens (32) in einem Bereich zwischen etwa 1,4 und etwa 1,7 liegt, und/oder
**dass** Mittel vorgesehen sind, um die Erwärmung des Nietdoms (20) so zu steuern und/oder zu regeln, dass dieser nur soweit erwärmt wird, dass er in den teigigen Zustand übergeht und ein Abschmelzen verhindert wird, und/oder
**dass** Mittel vorgesehen sind, um die Kraft, mit der das Bearbeitungselement (26) gegen den Nietdom (20) gepresst wird, so zu steuern und/oder zu regeln, dass das an den Nietdom (20) angelegte Bearbeitungselement (26) dem seinen teigförmigen Zustand annehmenden Nietdom (20) nachgeführt und der Nietdom (20) in diesem teigförmigen Zustand umgebördelt wird.

11. Vorrichtung nach einem der vorhergehenden Ansprüche,
**dadurch gekennzeichnet,**
**dass** das Bearbeitungselement (26) zur Ausbildung des Nietkopfes (36) an einem zumindest im Wesentlichen kreiszylindrischen Nietdom (20) mit einem rotationssymmetrischen Zapfen (32) und einer rotationssymmetrischen ringförmigen Ausnehmung (34) versehen ist.

12. Vorrichtung nach einem der vorhergehenden Ansprüche,
**dadurch gekennzeichnet,**
**dass** das Bearbeitungselement (26) durch eine erwärmbare Kalotte oder dergleichen gebildet ist.

13. Vorrichtung nach einem der Ansprüche 5 bis 11,
**dadurch gekennzeichnet,**
**dass** das Bearbeitungselement (26) durch eine Sonotrode gebildet ist.

14. Vorrichtung nach einem der vorhergehenden Ansprüche,
**dadurch gekennzeichnet,**
**dass** das vorzugsweise durch eine erwärmbare Kalotte gebildete Bearbeitungselement (26) einem in Richtung des Nietdoms (20) vor und zurück bewegbaren Nietwerkzeug zugeordnet ist, das zudem ein zur Erwärmung des Bearbeitungselements (26) bestimmtes Heizelement umfasst, das relativ zum Bearbeitungselement (26) bewegbar ist.

15. Vorrichtung nach Anspruch 14,
**dadurch gekennzeichnet,**
**dass** das Heizelement als Wärmespeicher ausgebildet ist, und/oder dass die Vorrichtung Mittel zur Kühlung des Bearbeitungselements (26) aufweist.
